# EUROPÄISCHE PATENTSCHRIFT

(11) **EP 2 984 353 B1**
(45) Veröffentlichungstag und Bekanntmachung des Hinweises auf die Patenterteilung: **07.06.2017**
(21) Anmeldenummer: 14714286.3
(22) Anmeldetag: 02.04.2014
(51) Int. Cl.: F16B 13/06

(54) **ANKER MIT SPREIZBEREICH UND SCHNEIDGEWINDE**
ANCHOR HAVING AN EXPANSION REGION AND A CUTTING THREAD
SYSTÈME D'ANCRAGE COMPRENANT UNE PARTIE EXPANSIBLE ET UN FILETAGE COUPANT

(30) Priorität: 11.04.2013 DE 102013206388
(43) Veröffentlichungstag der Anmeldung: 17.02.2016
(73) Patentinhaber: Hilti Aktiengesellschaft, 9494 Schaan (LI)
(72) Erfinder: ROSENKRANZ, Falk, CH-9658 Wildhaus (CH); BECKERT, Michael, CH-9444 Diepoldsau (CH); HAKENHOLT, Christoph, A-6800 Feldkirch (AT)
(74) Vertreter: Hilti Aktiengesellschaft Corporate Intellectual Property
(86) Internationale Anmeldenummer: PCT/EP2014/056573
(87) Internationale Veröffentlichungsnummer: WO 2014/166787

(56) Entgegenhaltungen:
- DE-A1- 2 256 822

## Beschreibung

Die Erfindung betrifft einen Anker, der in einem Bohrloch festlegbar ist, gemäss dem Oberbegriff des Anspruchs 1. Ein solcher Anker ist ausgebildet mit einer Spreizhülse zur Verankerung an einer Wand des Bohrlochs, und mit einem Ankerbolzen, der durch die Spreizhülse durchgeführt ist, und der einen Spreizbereich zum Aufspreizen der Spreizhülse sowie einen Anschlag aufweist, der eine axiale Verschiebung der Spreizhülse vom Spreizbereich hinweg begrenzt, wobei zumindest ein Drehmitnehmer vorgesehen ist, der die Spreizhülse drehfest mit dem Ankerbolzen koppelt.

In der Befestigungstechnik im Untergrund Beton unterscheidet man zwischen Einlegeelementen, welche in den Beton eingegossen werden, und nachträglich installierten Dübeln, welche im bereits ausgehärteten Beton verankert werden. Bei den nachträglich installierten Dübeln sind verschiedene Dübeltypen bekannt, z.B. Spreizanker (bekannt beispielsweise aus US5176481A), Schraubanker (bekannt beispielsweise aus DE102010063675A1), chemische Dübelsysteme (bekannt beispielsweise aus US6029417A) und Hinterschnittanker (bekannt beispielsweise aus US6238128B).

Alternative Ankerkonzepte mit Gewindehülse und Spreizelement sind aus der DE102006025268A1, der US2012192404A und der WO0047905A1 bekannt.

Die gattungsbildende DE 2256822 A1 beschreibt einen Anker, bei dem der Spreizkörper aus einem hülsenförmigen Ring besteht, und bei dem Mitnehmerflächen vorgesehen sind, an denen zugeordnete Flächen des Ringes zur formschlüssigen Verdrehsicherung angreifen. Insbesondere kann am Ring eine Aussparung vorgesehen sein, in die ein Vorsprung des Bolzens eingreift.

Aufgabe der Erfindung ist es, einen Anker anzugeben, der bei hoher Zuverlässigkeit und hohen Lastwerte besonders günstig setzbar und herstellbar ist.

Die Aufgabe wird erfindungsgemäss durch einen Anker mit den Merkmalen des Anspruchs 1 gelöst. Bevorzugte Ausführungsformen sind in den abhängigen Ansprüchen angegeben.

Bei einem gattungsgemässen Anker ist zumindest ein Drehmitnehmer vorgesehen, der die Spreizhülse drehfest mit dem Ankerbolzen koppelt. Ein erfindungsgemässer Anker ist dadurch gekennzeichnet, dass die Spreizhülse zumindest eine Aussengewindewendel zum Erzeugen eines Hinterschnitts in der Wand des Bohrlochs aufweist.

Ein Grundgedanke der Erfindung kann in einem Spreizanker gesehen werden, bei dem die Spreizhülse eine Aussengewindewendel aufweist, welche insbesondere eine so grosse Härte hat, dass sie in die Wand des Bohrlochs einschneiden kann, und bei dem die Spreizhülse ferner drehfest mit dem Ankerbolzen verbunden ist. Damit kann die Spreizhülse im Bohrloch über den Ankerbolzen in Drehung versetzt werden und die drehende Spreizhülse wiederum kann mit ihrer Gewindewendel im Bohrloch einen Hinterschnitt erzeugen. Ein derart ausgestalteter Anker bietet gegenüber konventionellen Ankern mehrere Vorteile:
- Mit der Aussengewindewendel kann beim Setzen ein, nahezu spreizkraftfreier, Hinterschnitt erzeugt werden, so dass verglichen mit einem einfachen Spreizanker höhere Lastwerte erzielt werden können. Zum Erzeugen dieses Hinterschnitts sind keine besonderen Hinterschnittbohrer erforderlich, so dass der Aufwand beim Setzen gering ist.
- Die Krafteinleitung vom Anker in das Substrat erfolgt nahezu ausschliesslich an der Spreizhülse mit der Gewindewendel und somit tief im Bohrloch. Die tatsächliche Verankerungstiefe und wirksame Verankerungstiefe liegen sehr nahe beieinander. Darüber hinaus ist beim erfindungsgemässen Anker die freie Bolzenlänge relativ gross, so dass eine hohe Dehnbarkeit erzielt werden kann. Schliesslich kann der erfindungsgemässe Anker aufgrund seiner relativ geringen Gewindelänge auch relativ einfach in ein Bohrloch eingebracht werden.
- Zwischen der Bohrlochwand und der mit der Aussengewindewendel versehenen Hülse kann ein Schraubgetriebe gebildet sein, welches eine Drehung der drehfest mit dem Ankerbolzen gekoppelten Spreizhülse in eine kombinierte Dreh- und Axialbewegung umsetzt. Diese kombinierte Bewegung kann wiederum den Spreizbereich des Ankerbolzens in die Spreizhülse einziehen. Der Anker kann somit in besonders einfacher Weise ausschliesslich durch Drehung des Ankerbolzens um seine Längsachse gesetzt werden.
- Der Anker ist lediglich zweiteilig und somit besonders günstig herstellbar.

Vorzugsweise bestehen die Spreizhülse und/oder der Ankerbolzen aus einem Metallmaterial. Die Aussengewindewendel auf der Spreizhülse ist so hart und/oder verschleissfest ausgebildet, dass hiermit in der Bohrlochwand ein ausgeprägter Hinterschnitt erstellt werden kann. Hierzu kann die gesamte Spreizhülse oder alternativ auch nur die Aussengewindewendel auf der Spreizhülse gehärtet sein.

Im Spreizbereich verjüngt sich der Ankerbolzen in Richtung zum Hülsenanschlag hin, das heisst im Spreizbereich nimmt der Querschnitt des Ankerbolzens mit zunehmendem Abstand vom Hülsenanschlag zu. Im nicht-verspreizten Ausgangszustand befindet sich die Spreizhülse zwischen dem Spreizbereich und dem Hülsenanschlag. Im gesetzten Zustand ist der Spreizbereich in die Spreizhülse eingezogen. Der Spreizbereich kann insbesondere zumindest bereichsweise konisch ausgebildet sein und somit auch als Spreizkonus bezeichnet werden.

Soweit hier von der Axialrichtung und der Radialrichtung die Rede ist, kann sich dies insbesondere auf die Längsachse des Ankerbolzens beziehen. Der Drehmitnehmer koppelt die Spreizhülse drehfest, aber axial verschiebbar mit dem Ankerbolzen. Die Drehung des Ankerbolzens und/oder der Spreizhülse erfolgt vorzugsweise um die Längsachse des Ankerbolzens und die drehfeste Kopplung durch den Drehmittnehmer bezieht sich somit vorzugsweise ebenfalls auf eine Drehung um die Längsachse des Ankerbolzens. Für eine besonders zuverlässige Kopplung können mehrere Drehmitnehmer vorgesehen sein.

Durch eine axiale Verschiebung der Spreizhülse relativ zum Ankerbolzen (welche wiederum bevorzugt durch eine Drehung des Ankerbolzens erzeugt werden kann), kann der Spreizbereich des Ankerbolzens in die Spreizhülse eingezogen und die Spreizhülse dabei zum Erstellen eines Hinterschnitts und zur Verankerung aufgeweitet werden. Besonders bevorzugt ist es, dass der Spreizbereich endnäher am Ankerbolzen angeordnet ist als der Hülsenanschlag. Das Bohrloch kann insbesondere in einem Betonsubstrat ausgebildet sein. Die Bohrlochwand, in der der Hinterschnitt erzeugt wird, kann bevorzugt etwa zylindrisch ausgebildet sein.

Das Schraubgetriebe, welches zwischen der Aussengewindewendel und der Bohrlochwand gebildet ist, führt zu einer axialen Bewegungskomponente, wenn der Ankerbolzen zusammen mit der Spreizhülse relativ zum Substrat gedreht wird. Wenn nun der Ankerbolzen axial festliegt, resultiert hieraus wiederum eine axiale Relativbewegung zwischen Spreizhülse und Ankerbolzen, die den Spreizbereich in die Spreizhülse einziehen und die Spreizhülse somit zur Verankerung aufspreizen kann. Der Anker kann in diesem Fall in besonders einfacher Weise durch eine Drehbewegung gesetzt werden. Eine vorteilhafte Ausgestaltung der Erfindung liegt darin, dass der Ankerbolzen bereichsweise im Bohrloch angeordnet ist, und dass der Ankerbolzen, vorzugsweise auf der dem Spreizbereich abgewandten Seite des Hülsenanschlags, einen Bolzenanschlag aufweist, der ein tieferes Einschieben des Ankerbolzens in das Bohrloch verhindert. Ein solcher Bolzenanschlag kann den Ankerbolzen besonders einfach und zuverlässig axial festlegen, so dass die zuvor genannte Wirkung eintritt. Der Bolzenanschlag ist vorzugsweise drehfest zum Ankerbolzen und/oder einstückig mit dem Ankerbolzen ausgeführt. Er kann insbesondere an einer Ringschulter gebildet sein.

Weiterhin ist es bevorzugt, dass am Ankerbolzen ein Kopf angeordnet ist, der querschnittsgrösser als der Ankerbolzen ist. Der Kopf ist bevorzugt endseitig am Ankerbolzen angeordnet und/oder einstückig mit diesem ausgebildet. Durch einen solchen Kopf kann ein besonders gut handhabbarerer Anker erhalten werden.

Weiterhin kann vorteilhafterweise ein Drehangriffsmittel zum formschlüssig drehfesten Koppeln des Ankerbolzens mit einem Setzwerkzeug vorgesehen sein, was die Handhabbarkeit weiter verbessern kann. Das Drehangriffsmittel ist vorzugsweise ein Mehrkant, insbesondere ein Aussenmehrkant, beispielsweise ein Aussensechskant, oder ein Innenmehrkant. Mittels des Drehangriffsmittels kann ein Setzwerkzeug formschlüssig drehfest an den Ankerbolzen angekoppelt werden. Somit kann ein Drehmoment vom Setzwerkzeug auf den Ankerbolzen übertragen werden und der Ankerbolzen zum Einfurchen der Aussengewindewendel in Drehung versetzt werden. Das Drehangriffsmittel kann insbesondere an dem Ende des Ankerbolzens angeordnet sein, welches dem Spreizbereich gegenüberliegt. Als Setzwerkzeug kann insbesondere ein Tangentialschlagschrauber zum Einsatz kommen.

Vorteilhafterweise kann das Drehangriffsmittel oder/und der Bolzenanschlag am Kopf vorgesehen sein. Besonders bevorzugt ist es, dass, sofern vorhanden, sowohl das Drehangriffsmittel als auch der Bolzenanschlag am Kopf vorgesehen sind. Der Kopf erfüllt gemäss dieser Ausführungsvariante mehrere Funktionen, so dass ein konstruktiv besonders einfacher und zuverlässiger Anker erhalten werden kann.

Besonders vorteilhaft ist es, dass die Spreizhülse zumindest einen Schlitz aufweist. Dies kann die Fertigung vereinfachen. Vorzugsweise können mehrere, bevorzugt parallel verlaufende, Schlitze vorgesehen sein. Hierdurch kann das Spreizverhalten der Hülse verbessert werden. Der zumindest eine Schlitz kann sich insbesondere in Axialrichtung erstrecken und vorzugsweise parallel zur Axialrichtung verlaufen.

Eine vorteilhafte Ausgestaltung liegt darin, dass der Drehmitnehmer ein vom Ankerbolzen vorstehender Vorsprung ist, der in den Schlitz eingreift. Gemäss dieser Ausführungsform kann der Schlitz eine Doppelfunktion übernehmen und sowohl zur Drehkopplung als auch zur Verbesserung des Spreizverhaltens dienen, so dass bei geringem Aufwand eine hohe Funktionalität gegeben ist. Sofern mehrere Schlitze vorhanden sind, kann jedem der Schlitze, aber auch nur einem Teil der Schlitze, ein korrespondierender Vorsprung am Bolzen als Drehmitnehmer zugeordnet sein. Einem einzelnen Schlitz können auch mehrere Vorsprünge am Bolzen als Drehmitnehmer zugeordnet sein. Der vom Ankerbolzen vorstehende Vorsprung kann beispielsweise ein Stift oder eine Kante sein.

Eine andere vorteilhafte Ausgestaltung liegt darin, dass der Drehmitnehmer eine Verzahnung am Hülsenanschlag ist, die in eine korrespondierende Verzahnung in der Spreizhülse eingreift. Die Verzahnungen können einen oder mehrere Zähne aufweisen.

Noch eine andere vorteilhafte Ausgestaltung liegt darin, dass der Drehmitnehmer durch eine mehrkantige Ausgestaltung des Ankerbolzens im Spreizbereich gebildet wird.

Besonders bevorzugt ist es, dass, bei gesetztem Anker, die Spreizhülse auch ausserhalb der Aussengewindewendel an der Wand des Bohrlochs anliegt. Insbesondere kann zumindest ein Teil des Gewindegrundes zwischen der Aussengewindewendel an der Wand des Bohrlochs anliegen. Die an der Bohrlochwand anliegende Hülse kann den Lastabtrag zusätzlich unterstützen und somit besonders gute Lastwerte ermöglichen, insbesondere da sie einem zum Ankerbolzen gerichteten Druck im Substrat entgegenwirken kann.

Die Erfindung betrifft auch ein Verfahren zum Setzen eines erfindungsgemässen Ankers in einem Bohrloch, bei dem der Ankerbolzen in das Bohrloch eingeführt und der Ankerbolzen um seine Längsachse gedreht wird.

Die Erfindung wird nachfolgend anhand bevorzugter Ausführungsbeispiele näher erläutert, die schematisch in der beiliegenden Figur dargestellt sind, wobei einzelne Merkmale der nachfolgend gezeigten Ausführungsbeispiele im Rahmen der Erfindung einzeln oder in beliebiger Kombination realisiert werden können. Es zeigt schematisch:

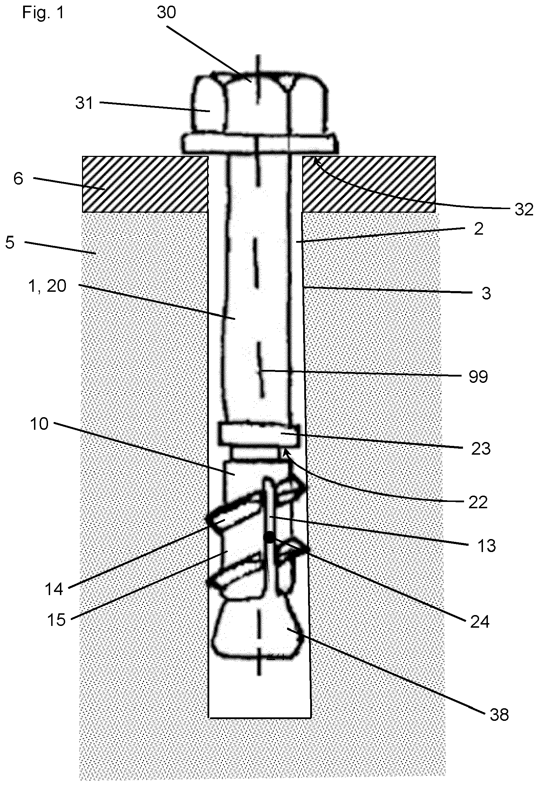

- Figur 1:: eine Seitenansicht eines Beispiels eines erfindungsgemässen Ankers in einem Bohrloch.

Ein Ausführungsbeispiel eines erfindungsgemässen Ankers ist in Figur 1 gezeigt. Der Anker 1 weist einen Ankerbolzen 20 sowie eine Spreizhülse 10 auf, wobei die Spreizhülse 10 den Ankerbolzen 20 zylindrisch umgibt. Der Ankerbolzen 20 ist durch ein Anbauteil 6 hindurch in ein Bohrloch 2 in einem Substrat 5, vorzugsweise in einem Betonsubstrat, eingeführt.

An seinem unteren Ende weist der Ankerbolzen 20 einen Spreizbereich 38 auf, in welchem der Querschnitt des Ankerbolzens 20 zum Aufweiten der Spreizhülse 10 nach unten hin, das heisst zum näher gelegenen Ende des Ankerbolzens 20 hin, kontinuierlich zunimmt. Vorzugsweise kann der Ankerbolzen 20 im Spreizbereich 38 konisch ausgebildet sein. Der Ankerbolzen 20 weist ferner einen Hülsenanschlag 22 auf, der eine Axialbewegung der Spreizhülse 10 nach oben, vom Spreizbereich 38 hinweg begrenzt. Der Hülsenanschlag 22 ist an einer Ringschulter 23 gebildet, welche den Ankerbolzen 20 umläuft.

An seinem dem Spreizbereich 38 gegenüberliegenden oberen Ende weist der Ankerbolzen 20 einen Kopf 30 auf, der querschnittsgrösser als der Ankerbolzen 20 ausgebildet ist. An diesem Kopf 30 ist umfangsseitig ein beispielsweise als Aussensechskant ausgebildetes Drehangriffsmittel 31 vorgesehen. An der dem Spreizbereich 38 zugewandten Unterseite des Kopfs 30 ist ein ringförmiger Bolzenanschlag 32 gebildet. Dieser Bolzenanschlag 32 liegt am Anbauteil 6 an und begrenzt somit den Weg, den der Ankerbolzen in das Bohrloch 2 eingeschoben werden kann.

Die Spreizhülse 10 weist einen Schlitz 13 auf, welcher sich ausgehend von derjenigen Stirnseite der Spreizhülse 10, die dem Spreizbereich 38 zugewandt ist, in die Spreizhülse 10 hinein erstreckt. Der Ankerbolzen 20 weist einen Drehmitnehmer 24 auf, welcher die Spreizhülse 10 drehfest, aber axial verschiebbar, mit dem Ankerbolzen 20 koppelt. Der Drehmitnehmer 24 ist im dargestellten Ausführungsbeispiel als Stift ausgebildet, der vom Ankerbolzen 20 radial vorsteht und in den Schlitz 13 der Spreizhülse 10 eingreift.

Auf ihrer Aussenseite weist die Spreizhülse 10 ferner eine Aussengewindewendel 14 auf, die in die Wand 3 des Bohrlochs 2 einschneiden kann. Die Gewindewendel 14 verläuft längs des Ankerbolzens 20 um die Längsachse 99 des Ankerbolzens 20 herum.

Der in Figur 1 dargestellte Anker kann in einem erfindungsgemässen Verfahren wie folgt gesetzt werden:
Zunächst wird das Bohrloch 2 im Substrat 5 erzeugt. Sodann wird der Ankerbolzen 20 mit dem Spreizbereich 38 voraus durch ein Loch im Anbauteil 6 hindurch in das Bohrloch 2 eingeführt und so lange weiter eingeschraubt oder eingeschlagen, bis der am Kopf 30 gebildete Bolzenanschlag 32 am Anbauteil 6 und dieses wiederum am Substrat 5 aufliegt. Der Hülsenanschlag 22 verhindert dabei, dass sich die Spreizhülse 10 am Ankerbolzen 20 zu weit zum Kopf 30 hin verschiebt.

Der Ankerbolzen 20 wird nun zum Anziehen des Ankers 1 um seine Längsachse 99 gedreht, und zwar durch ein nicht dargestelltes Setzwerkzeug, welches am Drehangriffsmittel 31 am Kopf 30 angesetzt wird. Das Setzwerkzeug kann beispielsweise ein Schraubenschlüssel oder ein Tangentialschlagschrauber sein. Aufgrund des Drehmitnehmers 24 dreht sich die Spreizhülse 10 mit dem Ankerbolzen 20 mit und die auf der Spreizhülse 10 angeordnete Aussengewindewendel 14 beginnt, ein Gegengewinde in die Bohrlochwand 3 zu schneiden.

Während des Gewindeschneidens bewegt sich die Spreizhülse 10 im Bohrloch 2 nach unten zum Bohrlochgrund hin. Da der Ankerbolzen 20 durch den Bolzenanschlag 32 axial fixiert ist, kann er dieser Axialbewegung der Spreizhülse 10 nicht nachfolgen. Das Resultat ist eine axiale Relativbewegung zwischen Spreizhülse 10 und Ankerbolzen 20, bei welcher der Spreizbereich 38 des Ankerbolzens 20 in die Spreizhülse 10 eingezogen wird, so dass er die Spreizhülse 10 radial aufweitet. Durch dieses radiale Aufspreizen der Spreizhülse 10 kann gewährleistet werden, dass die Spreizhülse 10 einen ausgeprägten Hinterschnitt in die Bohrlochwand 3 schneidet. Zugleich wird das zu Anbauteil 6 fest gegen das Substrat 5 gedrückt.

Sobald der Gewindegrund 15 der Spreizhülse 10, der zwischen der Gewindewendel 14 der Spreizhülse 10 gebildet ist, an der Bohrlochwand 3 anliegt, steigt das Drehmoment stark an. Dies kann als Indikator dafür verwendet werden, dass der Montagevorgang beendet ist.

## Patentansprüche

1. Anker (1), der in einem Bohrloch (2) festlegbar ist,
- mit einer Spreizhülse (10) zur Verankerung an einer Wand (3) des Bohrlochs (2),
- und mit einem Ankerbolzen (20), der durch die Spreizhülse (10) durchgeführt ist, und der einen Spreizbereich (38) zum Aufspreizen der Spreizhülse (10) sowie einen Hülsenanschlag (22) aufweist, der eine axiale Verschiebung der Spreizhülse (10) vom Spreizbereich (38) hinweg begrenzt,
- wobei zumindest ein Drehmitnehmer (24) vorgesehen ist, der die Spreizhülse (10) drehfest mit dem Ankerbolzen (20) koppelt,
**dadurch gekennzeichnet,**
- **dass** die Spreizhülse (10) zumindest eine Aussengewindewendel (14) zum Erzeugen eines Hinterschnitts in der Wand (3) des Bohrlochs (2) aufweist.

2. Anker (1) nach Anspruch 1,
**dadurch gekennzeichnet,**
**dass** der Ankerbolzen (20) bereichsweise im Bohrloch (2) angeordnet ist, und dass der Ankerbolzen (20) auf der dem Spreizbereich (38) abgewandten Seite des Hülsenanschlags (22) einen Bolzenanschlag (32) aufweist, der ein tieferes Einschieben des Ankerbolzens (20) in das Bohrloch (2) verhindert.

3. Anker (1) nach einem der vorstehenden Ansprüche,
**dadurch gekennzeichnet,**
**dass** am Ankerbolzen (20) ein Kopf (30) angeordnet ist, der querschnittsgrösser als der Ankerbolzen (20) ist,
und **dass** ein Drehangriffsmittel (31), insbesondere ein Aussenmehrkant, zum formschlüssig drehfesten Koppeln des Ankerbolzens (20) mit einem Setzwerkzeug vorgesehen ist,
wobei vorzugsweise das Drehangriffsmittel (31) am Kopf (30) vorgesehen ist.

4. Anker (1) nach Anspruch 2 und 3,
**dadurch gekennzeichnet,**
**dass** der Bolzenanschlag (32) am Kopf (30) vorgesehen ist.

5. Anker (1) nach einem der vorstehenden Ansprüche,
**dadurch gekennzeichnet,**
**dass** die Spreizhülse (10) zumindest einen Schlitz (13) aufweist, wobei der Drehmitnehmer (24) ein vom Ankerbolzen (20) vorstehender Vorsprung ist, der in den Schlitz (13) eingreift, oder/und
**dass** der Drehmitnehmer (24) eine Verzahnung am Hülsenanschlag (22) ist, die in eine korrespondierende Verzahnung in der Spreizhülse (10) eingreift, oder/und dass der Drehmitnehmer (24) durch eine mehrkantige Ausgestaltung des Ankerbolzens (20) im Spreizbereich (38) gebildet wird.

6. Verfahren zum Setzen eines Ankers (1) in einem Bohrloch (2), bei dem ein Anker (1) nach einem der vorstehenden Ansprüche bereitgestellt wird, der Ankerbolzen (20) dieses Ankers in das Bohrloch (2) eingeführt und der Ankerbolzen (20) um seine Längsachse (99) gedreht wird.

## Claims

1. Anchor (1) which is fixable in a borehole (2), comprising
- an expansion sleeve (10) for anchoring to a wall (3) of the borehole (2), and
- an anchor bolt (20) which passes through the expansion sleeve (10) and has an expansion region (38) for expanding the expansion sleeve (10) and a sleeve stop (22) which limits an axial displacement of the expansion sleeve (10) away from the expansion region (38),
- wherein at least one rotational driver (24) coupling the expansion sleeve (10) non-rotatably to the anchor bolt (20) is provided,
**characterised in that**
- the expansion sleeve (10) has at least one external thread turn (14) for producing an undercut in the wall (3) of the borehole (2).

2. Anchor (1) according to Claim 1,
**characterised in that**
the anchor bolt (20) is arranged in regions in the borehole (2), and **in that** the anchor bolt (20) has on the side of the sleeve stop (22) facing away from the expansion region (38) a bolt stop (32) which prevents the anchor bolt (20) from being pushed deeper into the borehole (2).

3. Anchor (1) according to any one of the preceding claims,
**characterised in that**
a head (30) having a larger cross section than the anchor bolt (20) is arranged on the anchor bolt (20),
and **in that** a rotational engagement means (31), in particular an external polygon, is provided for positive non-rotatable coupling of the anchor bolt (20) to a setting tool,
the rotational engagement means (31) preferably being provided on the head (30).

4. Anchor (1) according to Claims 2 and 3,
**characterised in that**
the bolt stop (32) is provided on the head (30).

5. Anchor (1) according to any one of the preceding claims,
**characterised in that**
the expansion sleeve (10) has at least one slot (13), the rotational driver (24) being a projection protruding from the anchor bolt (20) and engaging in the slot (13), or/and
the rotational driver (24) is a toothing on the sleeve stop (22) which engages in a corresponding toothing in the expansion sleeve (10), or/and in that the rotational driver (24) is formed by a polygonal configuration of the anchor bolt (20) in the expansion region (38).

6. Method for setting an anchor (1) in a borehole (2), whereby an anchor (1) according to any one of the preceding claims is made available, the anchor bolt (20) of this anchor is inserted in the borehole (2) and the anchor bolt (20) is rotated about its longitudinal axis (99).

## Revendications

1. Elément d'ancrage (1) pouvant être fixé dans un trou percé (2), comportant :
- une douille d'expansion (10) pour un ancrage sur une paroi (3) du trou percé (2),
- et un boulon d'ancrage (20) passé à travers la douille d'expansion (10) et comportant une zone d'expansion (38) pour écarter la douille d'expansion (10) ainsi qu'une butée de douille (32) qui limite un mouvement axial de la douille d'expansion (10) en s'éloignant de la zone d'expansion (38),
- dans lequel est prévu au moins un élément d'entraînement en rotation (24) qui couple la douille d'expansion (10) au boulon d'ancrage (20) de manière non rotative,
**caractérisé en ce que**
- la douille d'expansion (10) comporte au moins un filetage extérieur en hélice (14) pour générer une entaille dans la paroi (3) du trou percé (2).

2. Elément d'ancrage (1) selon la revendication 1, **caractérisé en ce que** le boulon d'ancrage (20) est agencé dans le trou percé (2) dans certaines zones, et **en ce que** le boulon d'ancrage (20) comporte une butée de boulon (32) sur le côté de la butée de douille (22) opposé à la zone d'expansion (38), laquelle butée de boulon empêche un enfoncement plus profond du boulon d'ancrage (20) dans le trou percé (2).

3. Elément d'ancrage (1) selon l'une des revendications précédentes, **caractérisé en ce qu'**une tête (30) est agencée sur le boulon d'ancrage (20), laquelle tête a une section transversale plus grande que le boulon d'ancrage (20), et **en ce que** des moyens d'application de force de rotation (31), en particulier un polygone extérieur, sont prévus pour un couplage non rotatif par complémentarité de formes du boulon d'ancrage (20) avec un outil de pose, dans lequel les moyens d'application de force de rotation (31) sont de préférence prévus sur la tête (30).

4. Elément d'ancrage (1) selon les revendications 2 et 3, **caractérisé en ce que** la butée de boulon (32) est prévue sur la tête (30).

5. Elément d'ancrage (1) selon l'une des revendications précédentes, **caractérisé en ce que**
la douille d'expansion (10) comporte au moins une fente (13), dans lequel l'élément d'entraînement en rotation (24) est une saillie faisant saillie depuis le boulon d'ancrage (20), qui s'engage dans la fente (13) et/ou **en ce que**
l'élément d'entraînement en rotation (24) est une denture sur la butée de douille (22), qui s'engage dans une denture correspondante dans la douille d'expansion (10), et/ou **en ce que**
l'élément d'entraînement en rotation (24) est formé par une configuration polygonale du boulon d'ancrage (20) dans la zone d'expansion (38).

6. Procédé pour poser un élément d'ancrage (1) dans un trou percé (2), comportant les étapes consistant à fournir un élément d'ancrage (1) selon l'une des revendications précédentes, introduire le boulon d'ancrage (20) de cet élément d'ancrage dans le trou percé (2) et faire tourner le boulon d'ancrage (20) autour de son axe longitudinal (99).
